# FASCICULE DE BREVET EUROPEEN

(11) **EP 4 185 500 B1**
(45) Date de publication et mention de la délivrance du brevet: **06.11.2024**
(21) Numéro de dépôt: 21740165.2
(22) Date de dépôt: 23.06.2021
(51) Int. Cl.: B60T 1/06, F16D 49/16, F16D 65/22, F16D 125/64

(54) **BOÎTIER DE TRANSMISSION ET ENGIN AUTOMOTEUR ROULANT ÉQUIPÉ D'UN BOÎTIER DE TRANSMISSION**
GETRIEBE UND MIT EINEM SOLCHEN GETRIEBE AUSGESTATTETES KRAFTFAHRZEUG
GEARBOX AND AUTOMOTIVE VEHICLE EQUIPPED WITH SUCH A GEARBOX

(30) Priorité: 21.07.2020 FR 2007661
(43) Date de publication de la demande: 31.05.2023
(73) Titulaire: France Reducteurs, 85500 Les Herbiers (FR)
(72) Inventeur: BRAY, Sébastien, 85590 LES EPESSES (FR); GUIROULT, Fabien, 85480 SAINT HILAIRE LE VOUHIS (FR)
(74) Mandataire: Ipsilon
(86) Numéro de dépôt international: PCT/FR2021/051146
(87) Numéro de publication internationale: WO 2022/018335

(56) Documents cités:
- FR-A1- 2 940 773
- US-A1- 2008 314 696
- US-A1- 2015 252 899

## Description

La présente invention concerne un boîtier de transmission, ainsi qu'un engin roulant équipé d'un tel boîtier de transmission.

Elle concerne en particulier un boîtier de transmission comprenant au moins un corps de boîtier délimitant au moins une cavité, et logés au moins partiellement à l'intérieur de la cavité, au moins un arbre de sortie, et un dispositif de freinage monté sur un arbre rotatif, ce dispositif de freinage comprenant deux freins activables, deux butées couplées mécaniquement entre elles et encadrant lesdits freins, et un organe de commande d' entraînement en déplacement desdits freins dans le sens d'un écartement l'un de l'autre pour le passage des freins d'un état inactif à un état actif, cet organe de commande commun aux deux freins, étant disposé entre lesdits freins, et monté mobile entre une position inactive et une position active de freinage pour le passage des freins d'un état inactif à un état actif, lesdites butées formant des butées de fin de course limitant le déplacement des freins dans le sens d'un écartement l'un de l'autre en position active de freinage de l'organe de commande.

Un tel boîtier de transmission pour engin automoteur roulant dans lequel l'arbre de sortie du boîtier forme l'arbre d'entraînement des roues de l'engin est connu comme l'illustrent les documents US 2015/252899, US 2008/314696 et FR 2940773. Certains engins présentent un arbre de sortie en plusieurs sections pour permettre l'entraînement des deux roues de l'engin équipant ledit arbre de sortie à des vitesses différentes. Ces vitesses différentes peuvent permettre de diriger l'engin à l'aide desdites roues qui forment alors à la fois des roues directrices et motrices. Toutefois, la conception des boîtiers de transmission ne permet pas jusqu'à présent, dans le cas de tels engins, d'intégrer un dispositif de freinage à l'intérieur du boîtier.

Un but de l'invention est de proposer un boîtier de transmission du type précité dont la conception permet d'intégrer le dispositif de freinage à l'intérieur du boîtier y compris dans le cas d'un arbre de sortie en plusieurs sections sans nuire à la compacité du dispositif de freinage.

A cet effet, l'invention a pour objet un boîtier de transmission comprenant au moins un corps de boîtier délimitant au moins une cavité, et logés au moins partiellement à l'intérieur de la cavité, au moins un arbre de sortie, et un dispositif de freinage monté sur un arbre rotatif, ce dispositif de freinage comprenant deux freins activables, deux butées couplées mécaniquement entre elles et encadrant lesdits freins, et un organe de commande d'entraînement en déplacement desdits freins dans le sens d'un écartement ou d'un rapprochement l'un de l'autre pour le passage des freins d'un état inactif à un état actif, cet organe de commande, commun aux deux freins,-étant monté mobile entre une position inactive et une position active de freinage pour le passage des freins d'un état inactif à un état actif, au moins l'une des butées formant une butée de fin de course limitant le déplacement des freins en position active de freinage de l'organe de commande, chaque frein étant un frein à cônes comprenant deux pièces à surfaces coniques sensiblement coaxiales entourant l'arbre équipé du dispositif de freinage, caractérisé en ce que l'arbre équipé du dispositif de freinage est formé au moins de deux sections d'arbre coaxiales, montées libres en rotation l'une par rapport à l'autre, et munies chacune de l'un des freins du dispositif de freinage, en ce que l'une des deux pièces à surfaces coniques de chaque frein, dite cône mâle, est montée solidaire en rotation de l'une des sections d'arbre dudit arbre équipé du dispositif de freinage, en ce que l'autre des deux pièces à surfaces coniques de chaque frein, dite cône femelle, est montée fixe en rotation par rapport audit arbre, et en ce que lesdites butées forment un ensemble monté déplaçable axialement le long de l'arbre équipé du dispositif de freinage, cet ensemble étant désolidarisé en rotation dudit arbre ou d'au moins l'une des sections dudit arbre.

Il doit être noté que l'arbre équipé du dispositif de freinage peut former l'arbre de sortie ou être distinct de l'arbre de sortie et en prise de manière directe ou indirecte avec l'arbre de sortie.

Selon un mode de réalisation de l'invention, l'arbre de sortie est formé au moins de deux sections d'arbre coaxiales montées libres en rotation l'une par rapport à l'autre, l'arbre de sortie est confondu avec l'arbre équipé du dispositif de freinage ou s'étend parallèlement à l'arbre équipé du dispositif de freinage, et les sections d'arbre munies d'un frein de l'arbre équipé du dispositif de freinage sont, lorsque l'arbre équipé du dispositif de freinage est distinct de l'arbre de sortie, en prise de manière directe ou indirecte l'une, avec l'une des sections d'arbre de l'arbre de sortie, l'autre, avec l'autre des sections d'arbre de l'arbre de sortie. Cette configuration autorise le montage d'un tel boîtier sur un engin dont les roues peuvent être utilisées à la fois comme roues motrices et directrices en faisant varier la vitesse de rotation de chacune des roues de l'arbre de sortie équipé d'une roue à chacune de ses extrémités.

Selon un mode de réalisation de l'invention, l'ensemble formé par les butées est monté, par rapport à l'arbre équipé du dispositif de freinage, fixe en rotation ou limité en déplacement angulaire. Ainsi, l'arbre équipé du dispositif de freinage peut tourner tandis que l'ensemble de butées est fixe en rotation à l'intérieur du boîtier, c'est-à-dire ne tourne pas.

Selon un mode de réalisation de l'invention, les butées à l'état couplé définissent entre elles un intervalle de longueur maximale fixe. Ainsi, les parois du boîtier peuvent être préservées, les forces de poussée étant contenues à l'intérieur dudit intervalle formé par les butées.

Selon un mode de réalisation de l'invention, les butées sont couplées l'une à l'autre par l'intermédiaire d'organes de liaison de type vis/écrou et maintenues à écartement l'une de l'autre par des entretoises montées sur lesdits organes de liaison.

Selon un mode de réalisation de l'invention, les butées affectent chacune la forme d'une plaque munie d'un perçage traversant pour pouvoir être traversées par l'arbre équipé du dispositif de freinage.

Selon un mode de réalisation de l'invention, l'organe de commande d'entraînement en déplacement desdits freins est un organe de commande d'entraînement en déplacement des freins dans le sens d'un écartement l'un de l'autre pour le passage des freins d'un état inactif à un état actif, cet organe de commande, commun aux deux freins,-est disposé entre lesdits freins, et monté mobile entre une position inactive et une position active de freinage pour le passage des freins d'un état inactif à un état actif, et lesdites butées formant des butées de fin de course limitant le déplacement des freins dans le sens d'un écartement l'un de l'autre en position active de freinage de l'organe de commande.

Selon un mode de réalisation de l'invention, le boîtier de transmission comprend un système d'entraînement en rotation de l'arbre équipé du dispositif de freinage et ledit système est configuré pour permettre un entraînement en rotation des sections d'arbre munies d'un frein de l'arbre équipé du dispositif de freinage à des vitesses de rotation différentes.

Selon un mode de réalisation de l'invention, le boîtier de transmission comprend deux moteurs électriques disposés à l'extérieur du corps du boîtier et portés par ledit corps, chaque moteur étant équipé d'un arbre moteur, lesdits arbres moteurs étant couplés de manière directe ou indirecte, l'un, avec l'une des sections d'arbre, l'autre avec l'autre ou une autre des sections d'arbre de l'arbre équipé du dispositif de freinage. Il est ainsi possible d'entraîner les sections d'arbre de l'arbre équipé du dispositif de freinage à des vitesses différentes et/ou dans des sens de rotation différents.

Selon un mode de réalisation de l'invention, les moteurs électriques sont reliés par au moins trois tiges s'étendant parallèlement à l'arbre de sortie et le corps de boîtier définit au moins une butée de limitation en déplacement de l'ensemble formé par les tiges et les moteurs autour d'un axe parallèle à l'arbre de sortie. Cette conception permet de garantir un parallélisme ou un positionnement coaxial des arbres moteurs.

L'invention a également pour objet un engin automoteur roulant équipé d'un boîtier de transmission, caractérisé en ce que le boîtier de transmission est du type précité.

### Brève description des dessins

L'invention sera bien comprise à la lecture de la description suivante d'exemples de réalisation, en référence aux dessins annexés dans lesquels :
[Fig. 1] représente une vue en perspective d'un engin roulant automoteur conforme à l'invention ;
[Fig. 2] représente une vue schématique d'une transmission de mouvement entre les moteurs et l'arbre de sortie du boîtier ;

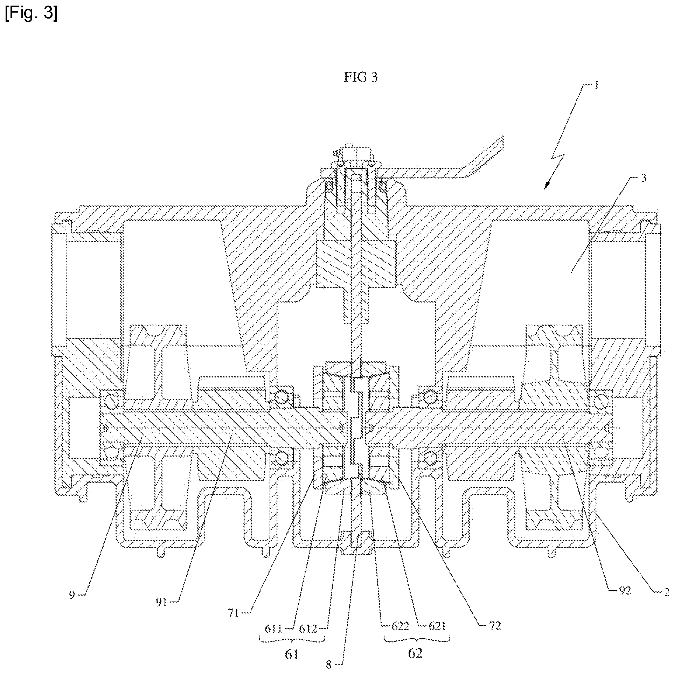

[Fig. 3] représente une vue partielle en coupe d'un boîtier de transmission conforme à l'invention ;

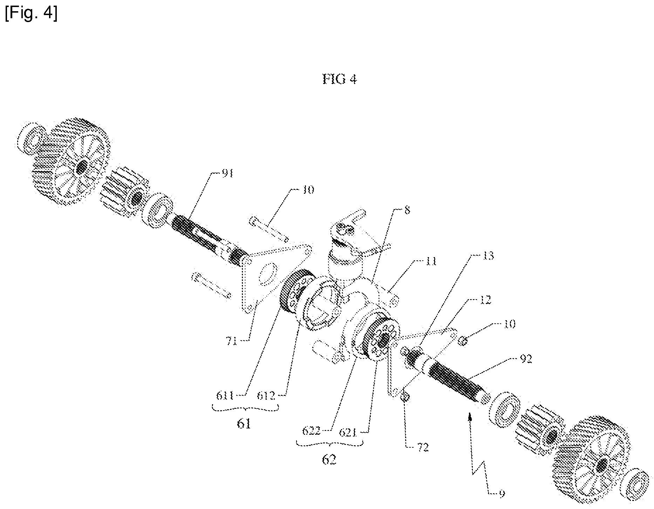

[Fig. 4] représente une vue en position éclatée des éléments de l'arbre équipé du dispositif de freinage ;
[Fig. 5] représente une vue partielle en coupe de l'arbre équipé du dispositif de freinage en position inactive de l'organe de commande avec une vue de détail des freins ;
[Fig. 6] représente une vue partielle en coupe de l'arbre équipé du dispositif de freinage en position active de l'organe de commande avec une vue de détail des freins ;

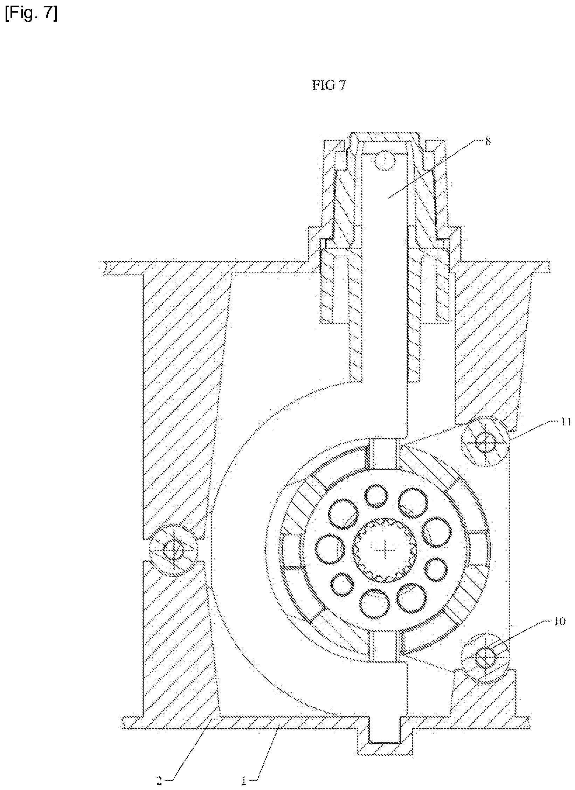

[Fig. 7] représente une vue partielle en coupe transversale de l'arbre équipé du dispositif de freinage prise au niveau de l'organe de commande ;

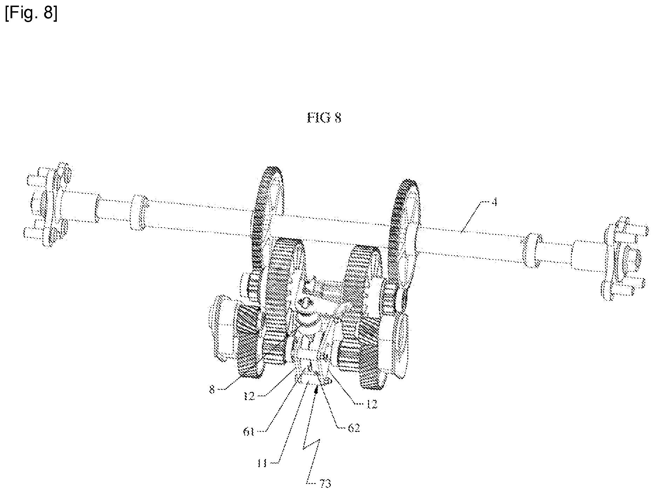

[Fig. 8] représente une vue partielle en perspective du boîtier sans le corps du boîtier ;

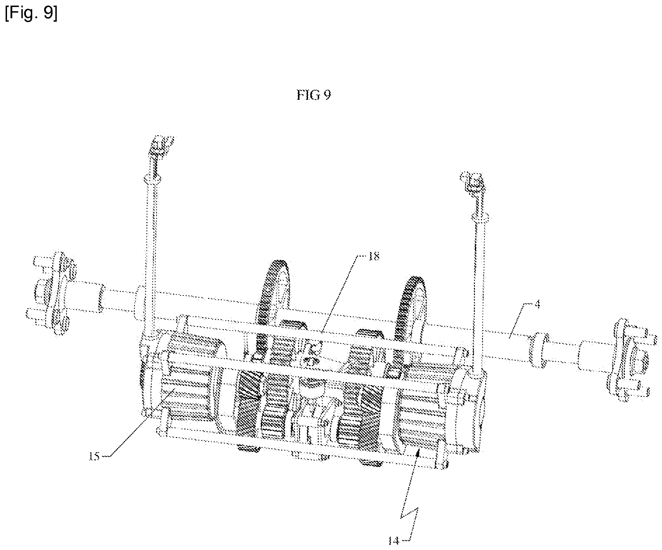

[Fig. 9] représente une vue partielle en perspective du boîtier sans le corps du boîtier ;

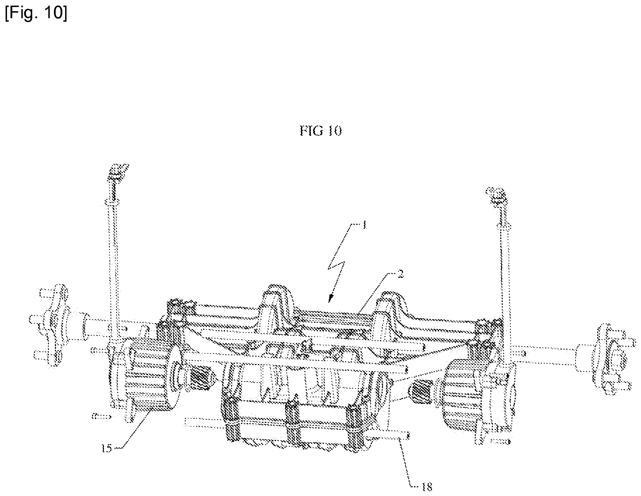

[Fig. 10] représente une vue en perspective du boîtier ;
[Fig. 11] représente une vue en perspective du boîtier avec une vue de détail du montage des tiges sur le boîtier ;
[Fig. 12] représente une vue schématique d'une transmission de mouvement entre les moteurs et l'arbre de sortie du boîtier.

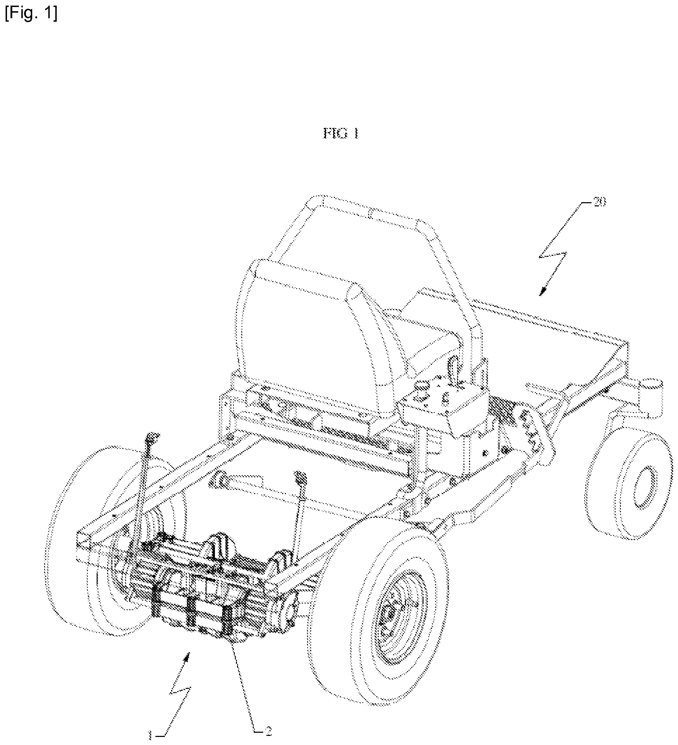

Comme mentionné ci-dessus, le boîtier 1 de transmission peut s'appliquer à tout type d'engin roulant automoteur. Un exemple d'un tel engin automoteur est fourni à la figure 1. Cet engin 20, qui peut être par exemple un engin de tonte, comprend deux roues avant et deux roues arrière. Les roues arrière sont reliées entre elles par un arbre. Cet arbre constitue l'arbre de sortie du boîtier 1 de transmission qui va être décrit ci-après. Dans l'exemple représenté, cet arbre est un arbre à plusieurs sections montées libres à rotation l'une par rapport à l'autre pour permettre un entraînement des roues arrière à des vitesses de rotation différentes. En outre, ces roues arrière peuvent être entraînées en rotation dans des sens de rotation différents. Les roues jouent donc ici à la fois le rôle de roues motrices et directrices.

Par ailleurs, l'engin 20 est équipé, au niveau de son poste de conduite, d'une commande de freinage dont le lien avec un dispositif 5 de freinage équipant le boîtier 1 de transmission sera décrit ci-après.

Le boîtier 1 de transmission comprend donc un corps 2 de boîtier. Ce corps 2 de boîtier, généralement en matière de synthèse, est formé de deux demi-coquilles assemblées par un plan de joint. Ce corps 2 de boîtier délimite à l'état fermé une cavité 3 à l'intérieur de laquelle sont logés au moins partiellement un certain nombre d'éléments. En particulier, un arbre 4 de sortie, qui forme ici, comme mentionné ci-dessus, l'arbre d'entraînement des roues arrière de l'engin, est logé partiellement à l'intérieur de la cavité 3 délimitée par le corps 2 de boîtier.

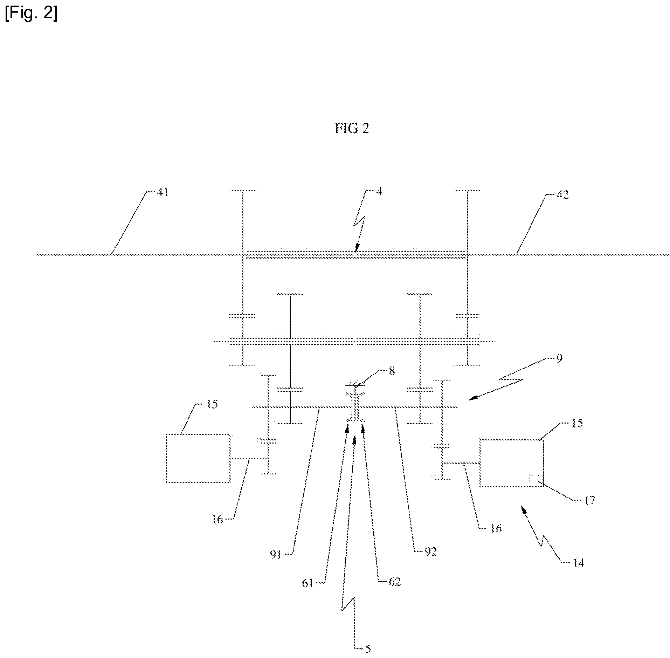

Dans les exemples représentés, cet arbre 4 de sortie est formé de deux sections 41, 42 d'arbre coaxiales montées libre en rotation l'une par rapport à l'autre. Ces deux sections 41 et 42 d'arbre sont reliées l'une à l'autre par un manchon, comme illustré à la figure 2, pour autoriser une telle indépendance en rotation.

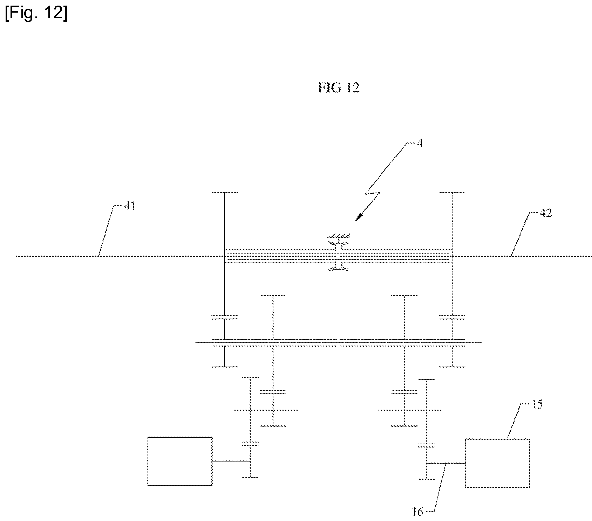

Le boîtier 1 de transmission comprend encore un dispositif 5 de freinage monté sur un arbre 9 rotatif. Cet arbre 9 équipé du dispositif 5 de freinage peut former l'arbre 4 de sortie ou être un arbre 9 distinct de l'arbre de sortie et en prise directe ou indirecte avec l'arbre 4 de sortie. Une transmission du mouvement de rotation de l'arbre 9 équipé du dispositif 5 de freinage à l'arbre 4 de sortie est permise. Le dispositif 5 de freinage comprend deux freins 61, 62 activables, deux butées 71 et 72 couplées mécaniquement entre elles et encadrant lesdits freins 61, 62, et un organe 8 de commande d'entraînement en déplacement des freins 61 et 62 dans le sens d'un écartement l'un de l'autre pour le passage des freins 61 et 62 d'un état inactif à un état actif. L'arbre 9 équipé du dispositif 5 de freinage est formé de deux sections 91, 92 d'arbre coaxiales, montées libres en rotation l'une par rapport à l'autre. Chaque section est munie de l'un des freins du dispositif 5 de freinage. Ainsi, la section 91 d'arbre est munie du frein 61 tandis que la section 92 d'arbre est munie du frein 62. L'arbre 9 équipé du dispositif 5 de freinage peut être confondu avec l'arbre 4 de sortie, comme illustré à la figure 12. En variante et comme illustré à la figure 2, l'arbre 9 équipé du dispositif 5 de freinage s'étend parallèlement à l'arbre 9 équipé du dispositif 5 de freinage et les sections 91 et 92 munies d'un frein 61, 62 de l'arbre équipé du dispositif 5 de freinage sont en prise de manière directe ou indirecte l'une avec l'une des sections d'arbre 4 de sortie, l'autre avec l'autre des sections d'arbre de l'arbre 4 de sortie. Par prise directe, on entend que le mouvement de rotation de la section 91 (ou respectivement 92) d'arbre de l'arbre 9 équipé du dispositif 5 de freinage est transmis directement à la section 41 (ou respectivement 42) d'arbre de l'arbre 4 de sortie. Par prise indirecte, on entend que la transmission de ce mouvement de rotation s'opère par exemple via un arbre intermédiaire interposé entre l'arbre 9 équipé du dispositif 5 de freinage et l'arbre 4 de sortie comme dans l'exemple représenté à la figure 2. Cet arbre intermédiaire est à nouveau un arbre en plusieurs sections. Indépendamment de la longueur de la chaîne de transmission de mouvement, le mouvement de rotation de la section 91 d'arbre de l'arbre 9 est transmis à la section 41 d'arbre de l'arbre 4 de sortie et le mouvement de rotation de la section 92 d'arbre de l'arbre 9 est transmis à la section 42 d'arbre de l'arbre 4 de sortie.

Pour permettre l'entraînement en rotation de l'arbre 9 équipé du dispositif 5 de freinage, le boîtier 1 de transmission comprend un système 14 d'entraînement en rotation de l'arbre 9 équipé du dispositif 5 de freinage. Ce système 14 d'entraînement en rotation est configuré pour permettre un entraînement en rotation des sections 91 et 92 d'arbre munies l'une du frein 61, l'autre du frein 62 à des vitesses de rotation différentes. En variante, il peut être prévu un entraînement en rotation des sections 91 et 92 de l'arbre 9 équipé du dispositif 5 de freinage à la même vitesse.

Ce système 14 d'entraînement en rotation de l'arbre 9 équipé du dispositif 5 de freinage peut affecter un grand nombre de formes. Dans l'exemple représenté, le système 14 d'entraînement en rotation de l'arbre 9 équipé du dispositif 5 de freinage comprend deux moteurs 15 électriques disposés à l'extérieur du corps 2 du boîtier et portés par ledit corps 2. Chaque moteur 15 est équipé d'un arbre 16 moteur. Les arbres 16 moteurs sont couplés de manière directe ou indirecte, l'un, avec l'une des sections 91 ou 92 d'arbre, l'autre avec l'autre ou une autre des sections 91 ou 92 d'arbre de l'arbre 9 équipé du dispositif 5 de freinage. Ce couplage peut donc à nouveau s'effectuer de manière directe ou indirecte.

Dans l'exemple représenté à la figure 2, l'arbre 16 moteur de chaque moteur 15 est équipé d'un pignon. Ce pignon vient en prise par engrènement avec un pignon porté par une section d'arbre de l'arbre 9 équipé du dispositif 5 de freinage pour une transmission directe du mouvement de rotation de l'arbre 16 moteur à une section d'arbre de l'arbre 9 équipé du dispositif 5 de freinage. Ainsi, l'un des arbres 16 moteur transmet son mouvement de rotation à la section 91 d'arbre de l'arbre 9 tandis que l'autre des arbres 16 moteur transmet son mouvement de rotation à la section 92 d'arbre de l'arbre 9 équipé du dispositif 5 de freinage. En variante, pour un couplage indirect, un arbre intermédiaire aurait pu être interposé entre les deux arbres 16 moteur et l'arbre 9 équipé du dispositif 5 de freinage sans sortir du cadre de l'invention.

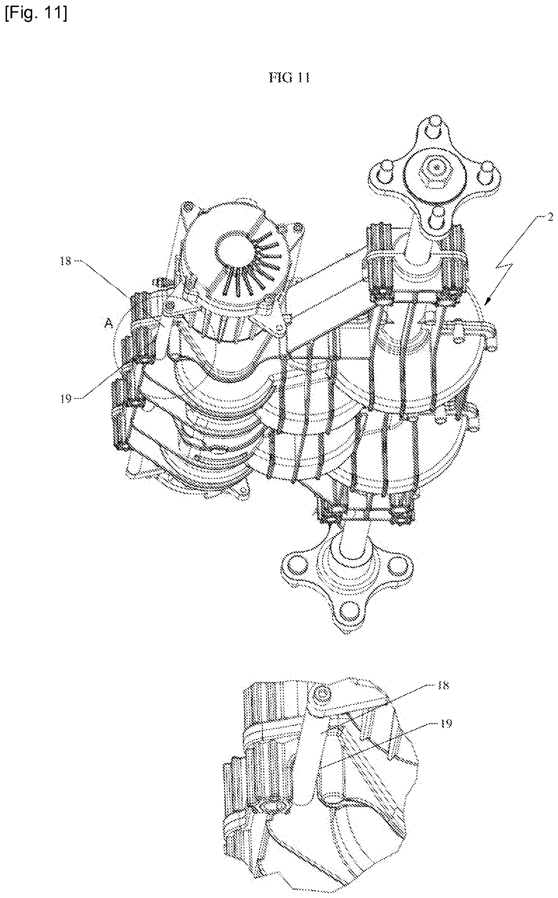

Dans les exemples représentés, les moteurs 15 électriques sont reliés par au moins trois tiges 18 s'étendant parallèlement à l'arbre 4 de sortie. Le corps 2 de boîtier définit au moins une butée 19 de limitation en déplacement de l'ensemble formé par les tiges 18 et les moteurs 15 autour d'un axe parallèle à l'arbre 4 de sortie. Cette butée 19 peut affecter la forme d'au moins une encoche et/ou un orifice traversant ménagé dans le corps 2 du boîtier 1. Un exemple d'une telle butée 19 est fourni à la figure 11.

Le dispositif 5 de freinage comprend, comme mentionné ci-dessus, deux freins 61 et 62. Chaque frein est un frein à cônes comprenant deux pièces à surfaces coniques sensiblement coaxiales entourant l'arbre 9 équipé du dispositif 5 de freinage et montées l'une, dite cône mâle, solidaire en rotation de l'une des sections d'arbre dudit arbre équipé du dispositif de freinage, l'autre, dite cône femelle, fixe en rotation par rapport audit arbre 9. Ainsi, l'arbre 9 peut tourner alors que le cône femelle ne tourne pas.

Les cônes mâle et femelle du frein 61 sont respectivement représentés en 611 et 612 tandis que les cônes mâle et femelle du frein 62 sont respectivement représentés en 621 et 622 aux figures.

Pour sa solidarisation en rotation à l'une des sections 91 ou 92 de l'arbre 9 équipé du dispositif 5 de freinage, chaque cône mâle est pourvu, au niveau de son évidement central, de cannelures axiales aptes à coopérer avec des cannelures complémentaires ménagées sur ladite section d'arbre.

Dans les exemples représentés, le cône 612 femelle du frein 61 et le cône 622 femelle du frein 62 affectent la forme d'une roue à alésage axial à portée conique. Le cône 611 mâle du frein 61 et le cône 621 mâle du frein 62, de préférence de forme générale tronconique, sont évidés centralement pour pouvoir être enfilés l'un, sur la section 91 d'arbre, l'autre, sur la section 92 d'arbre de l'arbre 9 équipé du dispositif 5 de freinage.

Le cône 612 femelle et le cône 611 mâle du frein 61, de même que le cône 622 femelle et le cône 621 mâle du frein 62 sont commandés en déplacement relatif axial dans le sens d'un rapprochement ou d'un écartement par l'intermédiaire de l'organe 8 de commande. A chaque fois, le cône mâle est, en position rapprochée des cônes mâle et femelle correspondant à l'état actif du frein, logé à l'intérieur de l'alésage axial du cône femelle avec sa surface périphérique externe conique en prise par contact d'appui avec la portée conique du cône femelle.

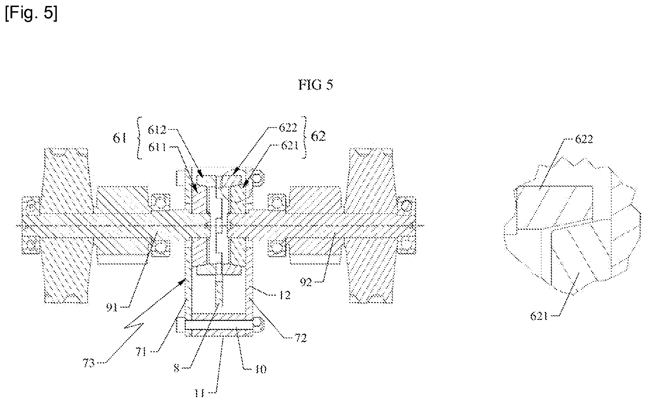

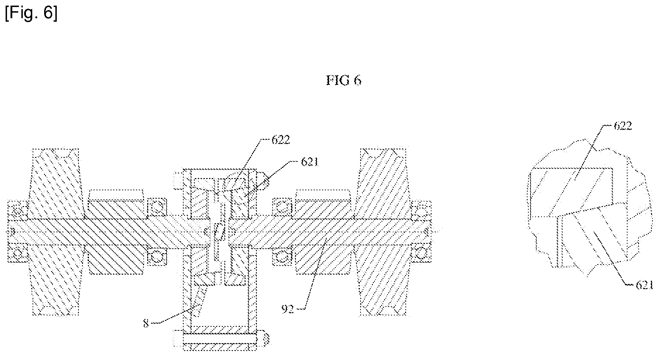

L'état inactif du frein correspond, dans les exemples représentés, à la position écartée des cônes mâle et femelle du frein. Ces états actif et inactif du frein sont illustrés aux figures 5 et 6. L'organe 8 de commande d'entraînement en déplacement des freins 61 et 62 est un organe 8 de commande d'entraînement en déplacement des freins 61 et 62 dans le sens d'un écartement l'un de l'autre pour le passage des freins 61 et 62 d'un état inactif à un état actif. Cet organe 8 de commande est commun aux deux freins 61 et 62. Cet organe 8 de commande est ici disposé entre les freins 61 et 62 et monté mobile entre une position inactive et une position active de freinage pour le passage des freins 61 et 62 d'un état inactif à un état actif.

Dans les exemples représentés, l'organe 8 de commande est un organe de commande à déplacement angulaire affectant la forme d'une fourchette à deux branches. Chaque branche de la fourchette est munie d'une dent radiale interne formant la partie active de commande de l'organe 8 de commande commun. Les roues constitutives des cônes femelles portent sur leurs faces en regard des dents formant une crénelure circulaire. Ces dents desdites crénelures s'interpénètrent en ménageant entre elles un espace libre d'insertion de la partie active de commande de l'organe 8 de commande commun.

Dans l'exemple représenté, le corps de fourchette affecte la forme d'un C ou d'un U. Les branches dudit organe 8 de commande sont formées par la zone jouxtant les extrémités libres du C ou des branches du U. A chaque fois, ces branches sont munies d'une dent radiale interne apte à venir se loger dans l'espace libre entre les flancs de deux dents des crénelures portées respectivement l'une par le cône 612 femelle, l'autre par le cône 622 femelle.

Dans les exemples représentés, la fourchette est pourvue uniquement de deux dents radiales internes positionnées de manière diamétralement opposée sur l'organe 8 de commande. Ces dents radiales internes se prolongent ici axialement et extérieurement audit organe 8 de commande pour former deux tronçons d'arbre de section carrée ou circulaire. Ces tronçons d'arbre sont destinés à venir se loger à l'intérieur de paliers ménagés dans le boîtier de transmission.

L'organe 8 de commande est déplaçable en rotation par l'intermédiaire d'un levier de commande positionné à l'extérieur du boîtier et venant en prise avec l'une des branches dudit organe 8 de commande. Le déplacement angulaire de l'organe 8 de commande provoque un écartement des cônes femelles. Cet écartement est obtenu par la venue en prise des surfaces actives des dents radiales internes de l'organe 8 de commande le long des flancs des dents, des crénelures des cônes femelles. On note que l'axe de rotation de l'organe de commande autorisant un déplacement angulaire de ce dernier s'étend sensiblement orthogonalement à l'axe autour duquel sont disposées, en disposition coaxiale, les surfaces coniques des cônes mâle et femelle, ce second axe correspondant à l'axe de rotation de l'arbre 9 équipé du dispositif de freinage.

Le dispositif 5 de freinage comprend encore, comme mentionné ci-dessus, deux butées 71 et 72 couplées mécaniquement entre elles et encadrant lesdits freins 61 et 62. Ces butées 71 et 72 forment des butées de fin de course limitant le déplacement des freins 61 et 62 dans le sens d'un écartement l'un de l'autre en position active de freinage de l'organe 8 de commande. Ces butées 71 et 72 forment un ensemble 73 monté déplaçable axialement le long de l'arbre 9 équipé du dispositif 5 de freinage. Cet ensemble 73 est désolidarisé en rotation dudit arbre 9 ou d'au moins l'une des sections dudit arbre. Ainsi, l'arbre 9 ou au moins l'une des sections dudit arbre équipé du dispositif 5 de freinage peut tourner sans que l'ensemble formé par les butées ne tourne.

Cet ensemble 73 formé par les butées 71 et 72 peut être monté par rapport à l'arbre 9 équipé du dispositif 5 de freinage fixe en rotation ou limité en déplacement angulaire à l'intérieur du corps du boîtier.

Indépendamment de leur conception, les butées 71 et 72, à l'état couplé, définissent entre elles un intervalle de longueur maximale fixe. Ces butées 71 et 72 sont couplées l'une à l'autre par l'intermédiaire d'organes 10 de liaison de type vis/écrou et maintenues à écartement l'une de l'autre par des entretoises 11 montées sur les organes 10 de liaison. Les entretoises 11 peuvent affecter la forme de simples manchons. Chaque manchon est traversé par la vis constitutive de l'organe de couplage. Les butées 71 et 72 affectent quant à elles chacune la forme d'une plaque 12 munie d'un perçage 13 traversant pour pouvoir être traversées par l'arbre 9 équipé du dispositif 5 de freinage. Les plaques sont ici réalisées triangulaires. Chaque entretoise 11 s'étend donc entre les plaques. Dans le cas d'une entretoise sous forme de manchon, chaque extrémité du manchon peut être en contact d'appui avec la face de la plaque en regard de l'autre plaque. Des formes de type berceau sont ménagées dans le boîtier pour entourer partiellement les manchons entretoises et assurer l'immobilisation en rotation de l'ensemble 73 formé par les butées 71 et 72 à l'intérieur dudit boîtier.

Le fonctionnement du système d'entraînement en rotation de l'arbre 9 et du dispositif 5 de freinage est tel que suit. On suppose que l'arbre 9 équipé du dispositif 5 de freinage tourne et que chaque section dudit arbre 9 transmet son mouvement de rotation à une section de l'arbre 4 de sortie. On suppose que l'organe 8 de commande est en position inactive. Le conducteur de l'engin commande donc, depuis son poste de commande, un déplacement angulaire de l'organe 8 de commande. Lors de ce déplacement angulaire de l'organe 8 de commande, le cône femelle 612 tend à se rapprocher du cône mâle 611 tandis que le cône femelle 622 tend à se rapprocher du cône mâle 621. En position extrême de rapprochement, la surface conique du cône 611 mâle est en contact d'appui avec la portée conique du cône 612 femelle. Il en est de même pour la paire de cônes 621 et 622. Dans cette position, les surfaces coniques des cônes mâles et femelles sont en contact d'appui de sorte que l'arbre 9 est freiné. Pour permettre un desserrage des freins, il suffit de déplacer angulairement l'organe 8 de commande dans une direction opposée. On note que le passage de la position freinée à la position desserrée des freins et inversement n'implique un déplacement axial que de quelques millimètres le long de l'arbre 9 des cônes femelles.

Pour assurer une coordination du fonctionnement des moteurs 15 électriques et du dispositif 5 de freinage, les moteurs 15 électriques sont associés à une unité 17 de commande et l'unité 17 de commande est configurée pour commander le passage de l'état marche à l'état arrêt desdits moteurs électriques en fonction de la position occupée par l'organe 8 de commande d'entraînement en déplacement des freins. Ainsi, lorsque le conducteur de l'engin agit pour commander le déplacement angulaire de l'organe 8 de commande d'entraînement en déplacement des freins dans le sens d'une activation des freins, un signal de commande est adressé en parallèle à l'unité de commande des moteurs 15 électriques pour commander l'arrêt des moteurs 15 électriques. On note que malgré la compacité du dispositif de freinage, les roues de l'engin peuvent être entraînées à des vitesses de rotation différentes et freinées.

## Revendications

1. Boîtier (1) de transmission comprenant au moins un corps (2) de boîtier délimitant au moins une cavité (3), et logés au moins partiellement à l'intérieur de la cavité (3), au moins un arbre (4) de sortie, et un dispositif (5) de freinage monté sur un arbre (9) rotatif, ce dispositif (5) de freinage comprenant deux freins (61, 62) activables, deux butées (71, 72) couplées mécaniquement entre elles et encadrant lesdits freins (61, 62), et un organe (8) de commande d'entraînement en déplacement desdits freins (61, 62) dans le sens d'un écartement ou d'un rapprochement l'un de l'autre pour le passage des freins (61, 62) d'un état inactif à un état actif, cet organe de commande, commun aux deux freins,-étant monté mobile entre une position inactive et une position active de freinage pour le passage des freins d'un état inactif à un état actif, lesdites butées (71, 72) formant un ensemble (73) monté déplaçable axialement le long de l'arbre (9) équipé du dispositif (5) de freinage, au moins l'une des butées (71, 72) formant une butée de fin de course limitant le déplacement des freins (61, 62) en position active de freinage de l'organe (8) de commande, chaque frein (61, 62) étant un frein à cônes comprenant deux pièces à surfaces coniques sensiblement coaxiales entourant l'arbre (9) équipé du dispositif (5) de freinage, **caractérisé en ce que** l'arbre (9) équipé du dispositif (5) de freinage est formé au moins de deux sections (91, 92) d'arbre coaxiales, montées libres en rotation l'une par rapport à l'autre, et munies chacune de l'un des freins (61, 62) du dispositif (5) de freinage, **en ce que** l'une des deux pièces à surfaces coniques de chaque frein (61, 62), dite cône (611, 621) mâle, est montée solidaire en rotation de l'une des sections (91, 92) d'arbre dudit arbre (9) équipé du dispositif (5) de freinage, **en ce que** l'autre des deux pièces à surfaces coniques de chaque frein (61, 62), dite cône (612, 622) femelle, est montée fixe en rotation par rapport audit arbre (9), et **en ce que** l'ensemble (73) formé par les butées (71, 72) est désolidarisé en rotation dudit arbre (9) ou d'au moins l'une des sections dudit arbre (9).

2. Boîtier (1) de transmission selon la revendication 1, **caractérisé en ce que** l'arbre (4) de sortie est formé au moins de deux sections (41, 42) d'arbre coaxiales montées libres en rotation l'une par rapport à l'autre, **en ce que** l'arbre (4) de sortie est confondu avec l'arbre (9) équipé du dispositif (5) de freinage ou s'étend parallèlement à l'arbre (9) équipé du dispositif (5) de freinage, et **en ce que** les sections (91, 92) d'arbre munies d'un frein (61, 62) de l'arbre (9) équipé du dispositif (5) de freinage sont, lorsque l'arbre (9) équipé du dispositif (5) de freinage est distinct de l'arbre (4) de sortie, en prise de manière directe ou indirecte l'une (91), avec l'une (41) des sections (41, 42) d'arbre de l'arbre (4) de sortie, l'autre (92), avec l'autre (42) des sections (41, 42) d'arbre de l'arbre (4) de sortie.

3. Boîtier (1) de transmission selon l'une des revendications 1 ou 2, **caractérisé en ce que** l'ensemble (73) formé par les butées (71, 72) est monté, par rapport à l'arbre (9) équipé du dispositif (5) de freinage, fixe en rotation ou limité en déplacement angulaire.

4. Boîtier (1) de transmission selon l'une des revendications 1 à 3, **caractérisé en ce que** les butées (71, 72) à l'état couplé définissent entre elles un intervalle de longueur maximale fixe.

5. Boîtier (1) de transmission selon l'une des revendications 1 à 4, **caractérisé en ce que** les butées (71, 72) sont couplées l'une à l'autre par l'intermédiaire d'organes (10) de liaison de type vis/écrou et maintenues à écartement l'une de l'autre par des entretoises (11) montées sur lesdits organes (10) de liaison.

6. Boîtier (1) de transmission selon l'une des revendications 1 à 5, **caractérisé en ce que** les butées (71, 72) affectent chacune la forme d'une plaque (12) munie d'un perçage (13) traversant pour pouvoir être traversées par l'arbre (9) équipé du dispositif (5) de freinage.

7. Boîtier (1) de transmission selon l'une des revendications 1 à 6, **caractérisé en ce que** l'organe (8) de commande d'entraînement en déplacement desdits freins (61, 62) est un organe (8) de commande d'entraînement en déplacement des freins (61,62) dans le sens d'un écartement l'un de l'autre pour le passage des freins (61, 62) d'un état inactif à un état actif, **en ce que** cet organe de commande, commun aux deux freins, est disposé entre lesdits freins, et monté mobile entre une position inactive et une position active de freinage pour le passage des freins d'un état inactif à un état actif, et **en ce que** lesdites butées (71, 72) formant des butées de fin de course limitant le déplacement des freins (61, 62) dans le sens d'un écartement l'un de l'autre en position active de freinage de l'organe (8) de commande.

8. Boîtier (1) de transmission selon l'une des revendications 1 à 7, **caractérisé en ce qu'**il comprend un système (14) d'entraînement en rotation de l'arbre (9) équipé du dispositif (5) de freinage et **en ce que** ledit système (14) est configuré pour permettre un entraînement en rotation des sections (91, 92) d'arbre munies d'un frein (61, 62) de l'arbre (9) équipé du dispositif (5) de freinage à des vitesses de rotation différentes.

9. Boîtier (1) de transmission selon l'une des revendications 1 à 8, **caractérisé en ce qu'**il comprend deux moteurs (15) électriques disposés à l'extérieur du corps (2) du boîtier (1) et portés par ledit corps (2), chaque moteur (15) étant équipé d'un arbre (16) moteur, lesdits arbres (16) moteurs étant couplés de manière directe ou indirecte, l'un, avec l'une des sections (91, 92) d'arbre, l'autre avec l'autre ou une autre des sections (91, 92) d'arbre de l'arbre (9) équipé du dispositif (5) de freinage.

10. Boîtier (1) de transmission selon la revendication 9, **caractérisé en ce que** les moteurs (15) électriques sont reliés par au moins trois tiges (18) s'étendant parallèlement à l'arbre (4) de sortie et **en ce que** le corps (2) de boîtier définit au moins une butée (19) de limitation en déplacement de l'ensemble formé par les tiges (18) et les moteurs (15) autour d'un axe parallèle à l'arbre (4) de sortie.

11. Engin (20) automoteur roulant équipé d'un boîtier (1) de transmission, **caractérisé en ce que** le boîtier (1) de transmission est conforme à l'une des revendications 1 à 10.

## Patentansprüche

1. Getriebegehäuse (1), umfassend mindestens einen Gehäusekörper (2), der mindestens einen Hohlraum (3) begrenzt, und die mindestens teilweise innerhalb des Hohlraums (3) untergebracht sind, mindestens eine Abtriebswelle (4) und eine Bremsvorrichtung (5), die auf einer Drehwelle (9) montiert ist, diese Bremsvorrichtung (5) umfassend zwei aktivierbare Bremsen (61, 62), zwei Anschläge (71, 72), die mechanisch miteinander gekoppelt sind und die Bremsen (61, 62) einrahmen, und ein Steuerelement (8) zum Antreiben der Verschiebung der Bremsen (61, 62) in Richtung einer Beabstandung oder einer Annäherung aneinander für den Übergang der Bremsen (61, 62) von einem inaktiven Zustand in einen aktiven Zustand, wobei dieses Steuerelement, das den zwei Bremsen gemeinsam ist, beweglich zwischen einer inaktiven Stellung und einer aktiven Bremsstellung für den Übergang der Bremsen von einem inaktiven Zustand in einen aktiven Zustand montiert ist, wobei die Anschläge (71, 72) eine Einheit (73) bilden, die axial verschiebbar entlang der mit der Bremsvorrichtung (5) ausgestatteten Welle (9) montiert ist, wobei mindestens einer der Anschläge (71, 72) einen Endanschlag bildet, der die Verschiebung der Bremsen (61, 62) in die aktive Bremsstellung des Steuerelements (8) begrenzt, wobei jede Bremse (61, 62) eine Kegelbremse ist, die zwei im Wesentlichen koaxiale Teile mit konischen Flächen umfasst, die die mit der Bremsvorrichtung (5) ausgestattete Welle (9) umgeben, **dadurch gekennzeichnet, dass** die mit der Bremsvorrichtung (5) ausgestattete Welle (9) aus mindestens zwei koaxialen Wellenabschnitten (91, 92) gebildet ist, die frei drehbar in Bezug aufeinander montiert sind und jeweils mit einer der Bremsen (61, 62) der Bremsvorrichtung (5) versehen sind, dass eines der zwei Teile mit konischen Flächen jeder Bremse (61, 62), der sogenannte Steckkonus (611, 621), drehfest mit einem der Wellenabschnitte (91, 92) der mit der Bremsvorrichtung (5) ausgestatteten Welle (9) montiert ist, dass das andere der zwei Teile mit konischen Flächen jeder Bremse (61, 62), der sogenannte weibliche Buchsenkonus (612, 622), drehfest in Bezug auf die genannte Welle (9) montiert ist, und dass die von den Anschlägen (71, 72) gebildete Anordnung (73) in Drehung von der Welle (9) oder von mindestens einem der Abschnitte der Welle (9) getrennt ist.

2. Getriebegehäuse (1) nach Anspruch 1, **dadurch gekennzeichnet, dass** die Abtriebswelle (4) aus mindestens zwei koaxialen Wellenabschnitten (41, 42) gebildet ist, die in Bezug aufeinander frei drehbar montiert sind, dass die Abtriebswelle (4) mit der mit der Bremsvorrichtung (5) ausgestatteten Welle (9) zusammenfällt oder sich parallel zu der mit der Bremsvorrichtung (5) ausgestatteten Welle (9) erstreckt, und dass die mit einer Bremse (61, 62) versehenen Wellenabschnitte (91, 92) der mit der Bremsvorrichtung (5) ausgestatteten Welle (9), wenn die mit der Bremsvorrichtung (5) ausgestattete Welle (9) sich von der Abtriebswelle (4) unterscheidet, die eine (91) mit einem (41) der Wellenabschnitte (41, 42) der Abtriebswelle (4), die andere (92) mit dem anderen (42) der Wellenabschnitte (41, 42) der Abtriebswelle (4) direkt oder indirekt in Eingriff sind.

3. Getriebegehäuse (1) nach einem der Ansprüche 1 oder 2, **dadurch gekennzeichnet, dass** die von den Anschlägen (71, 72) gebildete Anordnung (73) in Bezug auf die mit der Bremsvorrichtung (5) ausgestattete Welle (9) drehfest oder in Winkelverschiebung begrenzt montiert ist.

4. Getriebegehäuse (1) nach einem der Ansprüche 1 bis 3, **dadurch gekennzeichnet, dass** die Anschläge (71, 72) in dem gekoppelten Zustand untereinander einen Spalt mit fester maximaler Länge definieren.

5. Getriebegehäuse (1) nach einem der Ansprüche 1 bis 4, **dadurch gekennzeichnet, dass** die Anschläge (71, 72) über Verbindungselemente (10) vom Typ Schraube/Mutter miteinander gekoppelt sind und durch an den Verbindungselementen (10) angebrachte Abstandhalter (11) in einem Abstand voneinander gehalten werden.

6. Getriebegehäuse (1) nach einem der Ansprüche 1 bis 5, **dadurch gekennzeichnet, dass** die Anschläge (71, 72) jeweils die Form einer Platte (12) annehmen, die mit einer Durchgangsbohrung (13) versehen ist, damit sie von der mit der Bremsvorrichtung (5) versehenen Welle (9) durchquert werden können.

7. Getriebegehäuse (1) nach einem der Ansprüche 1 bis 6, **dadurch gekennzeichnet, dass** das Steuerelement (8) zum Antreiben der Verschiebung der Bremsen (61, 62) ein Steuerelement (8) für den Bewegungsantrieb der Bremsen (61, 62) in Richtung einer Beabstandung voneinander für den Übergang der Bremsen (61, 62) von einem inaktiven Zustand in einen aktiven Zustand ist, dass dieses Steuerelement, das den zwei Bremsen gemeinsam ist, zwischen den Bremsen angeordnet und beweglich zwischen einer inaktiven Stellung und einer aktiven Bremsstellung für den Übergang der Bremsen von einem inaktiven Zustand in einen aktiven Zustand montiert ist, und dass die Anschläge (71, 72) Endanschläge bilden, die die Verschiebung der Bremsen (61, 62) im Sinne einer Beabstandung voneinander in der aktiven Bremsstellung des Steuerelements (8) begrenzen.

8. Getriebegehäuse (1) nach einem der Ansprüche 1 bis 7, **dadurch gekennzeichnet, dass** es ein System (14) zum Drehantrieb der mit der Bremsvorrichtung (5) ausgestatteten Welle (9) umfasst und dass das System (14) konfiguriert ist, um einen Drehantrieb der mit einer Bremse (61, 62) versehenen Wellenabschnitte (91, 92) der mit der Bremsvorrichtung (5) ausgestatteten Welle (9) bei unterschiedlichen Drehgeschwindigkeiten zu ermöglichen.

9. Getriebegehäuse (1) nach einem der Ansprüche 1 bis 8, **dadurch gekennzeichnet, dass** es zwei Elektromotoren (15) umfasst, die außerhalb des Körpers (2) des Gehäuses (1) angeordnet sind und von dem Körper (2) getragen werden, wobei jeder Motor (15) mit einer Antriebswelle (16) ausgestattet ist, wobei die Antriebswellen (16) direkt oder indirekt gekoppelt sind, eine mit einem der Wellenabschnitte (91, 92), die andere mit dem anderen oder einem anderen der Wellenabschnitte (91, 92) der mit der Bremsvorrichtung (5) ausgestatteten Welle (9).

10. Getriebe (1) nach Anspruch 9, **dadurch gekennzeichnet, dass** die Elektromotoren (15) durch mindestens drei Stangen (18) verbunden sind, die sich parallel zu der Abtriebswelle (4) erstrecken und dass der Gehäusekörper (2) mindestens einen Anschlag (19) zur Begrenzung der Verschiebung der von den Stangen (18) und den Motoren (15) gebildeten Anordnung um eine Achse parallel zu der Abtriebswelle (4) definiert.

11. Selbstfahrende, rollende Maschine (20), die mit einem Getriebegehäuse (1) ausgestattet ist, **dadurch gekennzeichnet, dass** das Getriebegehäuse (1) einem der Ansprüche 1 bis 10 entspricht.

## Claims

1. Transmission box (1) comprising at least one box body (2) delimiting at least one cavity (3), and housed at least partially inside the cavity (3), at least one output shaft (4), and a braking device (5) mounted on a rotating shaft (9), the braking device (5) comprising two brakes (61, 62) which can be activated, two stops (71, 72) mechanically coupled to each other and framing said brakes (61, 62), and a control member (8) for moving said brakes (61, 62) away from each other or closer to each other in order to switch the brakes (61, 62) from an inactive state to an active state, the control member, common to the two brakes, being mounted movable between an inactive state and an active state of braking in order to switch the brakes from an inactive state to an active state, said stops (71, 72) forming an assembly (73) mounted movably axially along the shaft (9) equipped with a braking device (5), at least one of the stops (71, 72) forming an end of travel stop limiting the movement of the brakes (61, 62) in the active braking position of the control member (8), each brake (61, 62) being a cone brake comprising two parts with conical surfaces substantially coaxial surrounding the shaft (9) equipped with the braking device (5), **characterized in that** the shaft (9) equipped with the braking device (5) is formed by at least two axial sections (91, 92) of the shaft, mounted free in rotation relative to each other, and each provided with one of the brakes (61, 62) of the braking device (5), **in that** one of the two parts with conical surfaces of each brake (61, 62), called male cone (611, 621), is mounted rigidly attached in rotation to one of the sections (91, 92) of said shaft (9) equipped with the braking device (5), **in that** the other of the two parts with conical surfaces of each brake (61, 62), called female cone (612, 622), is mounted fixed in rotation with regard to said shaft (9), **in that** the assembly (73) formed by the stops (71, 72) is detached in rotation from said shaft (9) or from at least one of the sections of said shaft (9).

2. The transmission box (1) according to claim 1, **characterized in that** the output shaft (4) is formed by at least two coaxial shaft sections (41, 42) mounted free in rotation relative to each other, **in that** the output shaft (4) is coincident with the shaft (9) equipped with the braking device (5) or extends parallel to the shaft (9) equipped with the braking device (5), **in that** the shaft sections (91, 92) equipped with a brake (61, 62) of the shaft (9) equipped with the braking device (5) are, when the shaft (9) equipped with the braking device (5) is distinct from the output shaft (4), engaged, directly or indirectly, one (91) with one (41) of the shaft sections (41, 42) of the output shaft (4), the other (92) with the other (42) of the shaft sections (41, 42) of the output shaft (4).

3. The transmission box (1) according to one of claims 1 or 2, **characterized in that** the assembly (73) formed by the stops (71, 72) is mounted, relative to the shaft (9) equipped with the braking device (5), fixed in rotation or with a limited angular movement.

4. The transmission box (1) according to one of claims 1 to 3, **characterized in that** the stops (71, 72), in the coupled state, define therebetween an interval of fixed maximum length.

5. The transmission box (1) according to one of claims 1 to 4, **characterized in that** the stops (71, 72) are coupled to each other by means of screw/nut connection members (10) and held apart from each other by spacers (11) mounted on said connection members (10).

6. The transmission box (1) according to one of claims 1 to 5, **characterized in that** the stops (71, 72) each take the form of a plate (12) provided with a through drilled hole (13) for letting through the shaft (9) equipped with the braking device (5).

7. The transmission box (1) according to one of claims 1 to 6, **characterized in that** the control member (8) for moving the brakes (61, 62) is a control member (8) for moving the brakes (61, 62) away from each other in order to switch the brakes (61, 62) from an inactive state to an active state, **in that** the control member, common to both brakes, is arranged between said brakes, and mounted movable between an inactive braking position and an active braking position in order to switch the brakes from an inactive state to an active state, and **in that** said stops (71, 72) form end of travel stops limiting the movement of the brakes (61, 62) away from each other in the active braking position of the control member (8).

8. The transmission box (1) according to one of claims 1 to 7, **characterized in that** same comprises a system (14) for rotating the shaft (9) equipped with the braking device (5) and **in that** said system (14) is configured for rotating the shaft sections (91, 92) equipped with a brake (61, 62) of the shaft (9) equipped with the braking device (5), at different rotational speeds.

9. The transmission box (1) according to one of claims 1 to 8, **characterized in that** same comprises two electric motors (15) arranged outside the body (2) of the box (1) and supported by said body (2), each motor (15) being equipped with a motor shaft (16), said motor shafts (16) being coupled directly or indirectly, one with one of the shaft sections (91, 92), the other with the other or another of the shaft sections (91, 92) of the shaft (9) equipped with the braking device (5).

10. The transmission box (1) according to claim 9, **characterized in that** the electric motors (15) are connected by at least three rods (18) extending parallel to the output shaft (4) and **in that** the box body (2) defines at least one stop (19) for limiting the movement of the assembly formed by the rods (18) and the motors (15) about an axis parallel to the output shaft (4).

11. A self-propelled rolling machine (20) equipped with a transmission housing (1), **characterized in that** the transmission housing (1) is according to one of claims 1 to 10.
